# EUROPEAN PATENT APPLICATION

(11) **EP 4 841 308 A1**
(43) Date of publication of application: **18.11.2026**
(21) Application number: 25176822.2
(22) Date of filing: 15.05.2025
(51) Int. Cl.: G01S 19/38, G01S 19/50

(54) **EARTH-STEP ADJUSTMENT FOR GEOSPATIAL POSITIONING**

(71) Applicant: Universiteit Antwerpen, 2000 Antwerpen (BE); Imec VZW, 3001 Leuven (BE)
(72) Inventor: VAN UYTSEL, Wout, 2020 Antwerpen (BE); MAJORANA, Andres Maria, 2020 Antwerpen (BE); JANSSEN, Thomas, 2020 Antwerpen (BE); WEYN, Maarten, 2020 Antwerpen (BE)
(74) Representative: Ipsilon Belgium

(57) **Abstract**

Example embodiments relate to a computer-implemented method for geospatial positioning of a geospatial receiver by a satellite system; the computer-implemented method comprising: iteratively determining (103) an update step (113) using an iterative descent algorithm configured to minimize an error (112) between a set of estimated observables, derived from an estimated geospatial position of the geospatial receiver relative to the satellite system, and a set of measured observables obtained from the satellite system; and updating (104) the estimated geospatial position (114) in each iteration (106) based on the respective update step (113); wherein the computer-implemented method is characterized by adjusting (202) the magnitude (215) while preserving the direction of one of the update steps (113) such that the update (204, 214) of the estimated geospatial position (212) is located substantially at the Earth's surface (211).

## Description

### Field of the Invention

The present invention generally relates to geospatial positioning of a geospatial receiver.

### Background of the Invention

Positioning, navigation and timing, PNT, services are the backbone for a wide range of applications and industries, e.g. aviation, transportation, agriculture, and energy. In outdoor situations, PNT services are typically provided by Global Navigation Satellite Systems, GNSS, such as, for example, Galileo, GPS, BeiDou, and GLONASS. However, GNSS satellites have some problems and challenges. Due to their location in Medium Earth Orbit, MEO, at an altitude of about 20 000 km, GNSS signals arrive on Earth with a relatively low signal strength. This makes GNSS-based positioning vulnerable to jamming attacks, unreliable for indoor positioning, and energy-intensive for battery-powered devices.

Recently, significant attention has been devoted to geospatial positioning with Low Earth Orbit, LEO, satellites, which orbit the Earth at an altitude up to 2000 km. This lower orbit results in significantly less path loss compared to GNSS, as the signals travel a shorter distance before arriving at a geospatial receiver. This makes LEO-based positioning more robust against jamming attacks, more reliable for indoor positioning, and less energy intensive.

Typical geospatial receivers determine their geospatial position using a positioning algorithm that iteratively reduces the error between two sets of observables: a set of estimated observables derived from an initial position estimate and a set of observables actually measured by the geospatial receiver from satellite signals. Typically, in GNSS-based positioning, the initial position estimate is selected to be the centre of the Earth. A problem with LEO-based positioning is that common positioning algorithms fail to converge to the geospatial position of the receiver, especially without upfront knowledge of the receiver's approximate position, i.e. during a so-called 'cold start'.

### Summary of the Invention

It is an object of the present invention, amongst others, to solve or alleviate the above identified problems and challenges by improving geospatial positioning, in particular without upfront knowledge of the receiver's approximate position.

According to a first aspect, this object is achieved by a computer-implemented method for geospatial positioning of a geospatial receiver by a satellite system. The computer-implemented method comprising:
- iteratively determining an update step using an iterative descent algorithm configured to minimize an error between a set of estimated observables, derived from an estimated geospatial position of the geospatial receiver relative to the satellite system, and a set of measured observables obtained from the satellite system; and
- updating the estimated geospatial position in each iteration based on the respective update step;
wherein the computer-implemented method is characterized by:
- adjusting the magnitude while preserving the direction of one of the update steps such that the update of the estimated geospatial position is located substantially at the Earth's surface.

The iterative descent algorithm may start from an initial estimated geospatial position, e.g. the centre of the Earth. A set of estimated observables is then derived based on the position of the satellites within the satellite system and the initial estimated geospatial position. The iterative descent algorithm determines an update step to reduce the error or residual between the measured and estimated observables. The initial estimated geospatial position is then updated based on the update step, thereby obtaining an update of the estimated geospatial position serving as the estimated geospatial position for the next iteration.

The present disclosure improves geospatial positioning by, during one of the iterations of the iterative descent algorithm, adjusting the magnitude of the determined update step such that, after updating the estimated geospatial position based on the adjusted update step, the updated estimated geospatial position is located substantially at the Earth's surface.

Preferably, the update step may be adjusted during one of the first few iterations of the iterative descent algorithm. The Earth's surface may refer to the surface of any model or representation of the Earth, e.g. a geoid or an ellipsoid, in a geospatial coordinate system. Substantially at the Earth's surface may, for example, refer to a location in a geospatial coordinate system that lies within a radial range extending approximately 20 km above or below the Earth's surface, depending on the use-case of the geospatial receiver, e.g. on board of a submarine, a car, or an airplane.

Adjusting one of the update steps according to the present disclosure avoids divergence of the iterative descent algorithm due to an overestimation of the radial distance of the geospatial receiver's position from the Earth's centre. In other words, the adjustment step can avoid overstepping or overshooting of the iterative descent algorithm which can cause it to get trapped in a local minimum and thereby failing to converge to the actual position of the geospatial receiver. This improves the convergence rate of the iterative descent algorithm, in particular when upfront knowledge of the geospatial receiver's approximate position is unavailable, when the satellite system only comprises Low Earth Orbit, LEO, satellites, and/or when the satellite system comprises a mixed constellation design with at least one LEO satellite.

The computer-implemented method can further improve the convergence speed of iterative descent algorithms used for geospatial positioning, as it reduces the number of iterations needed to converge to the actual geospatial position of the geospatial receiver. This has the advantage that it reduces the computational burden of the iterative descent algorithm and, thus, reduces the energy consumption at the geospatial receiver. It is thus a further advantage that the computer-implemented method can extend the battery life of battery-powered geospatial receivers. It is a further advantage that the computer-implemented method can easily be implemented in existing geospatial receivers and that existing iterative descent algorithms can easily be adapted to perform the adjusting step.

According to an example embodiment, adjusting the magnitude while preserving the direction of one of the update steps may comprise scaling one of the update steps.

Scaling may comprise multiplying the determined update step with a scaling factor. As the update step represents a vector in a geospatial coordinate system, scaling the update step thus results in adjusting the magnitude of the update step while maintaining its direction and orientation. It is an advantage that scaling the update step is computationally inexpensive.

According to an example embodiment, the estimated geospatial position that is updated with the adjusted update step may be located within the Earth's interior at a radial distance from the Earth's centre to the Earth's surface.

In other words, the iteration of the iterative descent algorithm during which the update step is adjusted may have an estimated geospatial position located within the Earth's interior, i.e. beneath a reference surface representation of the Earth such as a geoid or reference ellipsoid.

According to an example embodiment, the estimated geospatial position that is updated with the adjusted update step may be located at the centre of the Earth.

This may, for example, be the case when a so-called 'cold start' is performed without upfront knowledge of the receiver's approximate position. The centre of the Earth may, for example, correspond to coordinates {0, 0, 0} in an Earth Centred Earth Fixed, ECEF, coordinate reference system and respective reference frame. The centre of the Earth may, for example, correspond to coordinates represented by the null vector of the chosen Earth Centred coordinate reference system and respective reference frame.

According to an example embodiment, scaling one of the update steps may comprise scaling the update step by a factor equal to a ratio of the radial distance from the estimated geospatial position to the Earth's surface relative to the magnitude of the update step.

If the estimated geospatial position is located at the centre of the Earth, the radial distance from the estimated geospatial position to the Earth's surface may correspond to a mean radius of the Earth depending on the used Earth model, e.g. ellipsoid or geoid. It is a further advantage that determining the scaling factor itself is also computationally inexpensive.

According to an example embodiment, the computer-implemented method comprises adjusting an update step determined during an initial iteration of the iterative descent algorithm; and updating an initial estimated geospatial position based on the adjusted update step.

The one update step that is being adjusted may thus correspond to the update step determined during the first iteration of the iterative descent algorithm. In doing so, the second estimated geospatial position, updated from the initial estimated position, will be located substantially at the Earth's surface. Thereafter, the iterative descent algorithm may proceed using established techniques until the estimated position converges to the actual position of the geospatial receiver. This can maximize the achieved improvement in convergence speed, as it maximally reduces the number of iterations needed to converge to the actual geospatial position of the geospatial receiver.

According to an example embodiment, the set of estimated observables and the set of measured observables are selected from the group comprising pseudo range observables, carrier phase observables, and doppler shift observables.

A pseudorange observable may refer to the apparent distance between a satellite and a geospatial receiver, determined from the time delay between signal transmission by the satellite and reception at the geospatial receiver. A pseudorange observable may further be compensated for, amongst others, clock errors, atmospheric delays, orbital errors, relativistic errors, Sagnac effect, instrumental errors, and multipath errors. The compensated atmospheric delays may, for example, be tropospheric and/or ionospheric in nature.

A carrier phase observable may refer to a measurement of the accumulated phase of a carrier signal received from a satellite. A doppler shift observable, sometimes also referred to as pseudorange-rate observable, may refer to a measurement of the frequency shift of the satellite signal caused by the relative motion between satellite and geospatial receiver. Carrier phase and doppler shift observables may allow using communication satellites for geospatial positioning, even if those satellites are not designed specifically for geospatial positioning.

According to an example embodiment, the iterative descent algorithm may be a Gauss-Newton Least Squares algorithm.

The improvement in convergence speed and convergence rate may be particularly significant when using a Gauss-Newton Least Squares algorithm. However, it will be apparent that other iterative descent algorithms may also be used, e.g. a gradient descent algorithm, a Levenberg-Marquardt algorithm, a Trust region algorithm, or any other least squares algorithm.

According to an example embodiment, the satellite system may comprise at least four satellites selected from the group comprising Low Earth Orbit, LEO, satellites; Medium Earth Orbit, MEO, satellites; and Geostationary Earth Orbit, GEO, satellites.

The set of tracked satellites or satellites in view, i.e. the satellites used by the geospatial receiver for positioning, may thus comprise any combination of LEO, MEO, and GEO satellites. It will be apparent that in specific situations, e.g. during multiepoch or constrained positioning, the satellite system may comprise fewer than four satellites. The satellite system may thus comprise one or more satellites selected from the group comprising Low Earth Orbit, LEO, satellites; Medium Earth Orbit, MEO, satellites; and Geostationary Earth Orbit, GEO, satellites.

According to an example embodiment, the satellite system may only comprise Low Earth Orbit, LEO, satellites.

The computer-implemented method avoids divergence of geospatial positioning using an iterative descent algorithm when only relying on LEO satellites without upfront knowledge of the geospatial receiver's approximate position. This has the advantage that LEO satellites can be used, which are more robust against jamming attacks, more reliable for indoor positioning, and less energy intensive.

According to a second aspect, the invention relates to a geospatial receiver configured to perform the computer implemented method according to the first aspect.

According to a third aspect, the invention relates to a computer program comprising instructions which, when the program is executed by a computer, cause the computer to perform the computer implemented method according to the first aspect.

According to a fourth aspect, the invention relates to a computer-readable medium comprising instructions which, when executed by a computer, cause the computer to perform the computer implemented method according to the first aspect.

### Brief Description of the Drawings

Fig. 1 shows example steps typically performed by existing iterative descent algorithms to determine the geospatial position of a geospatial receiver from satellite signals;
Fig. 2 shows steps of a computer-implemented method according to example embodiments;
Fig. 3A shows an example embodiment for determining a scaling factor for the adjusted update step wherein the estimated geospatial position coincides with the centre of the Earth;
Fig. 3B shows an example embodiment for determining a scaling factor for the adjusted update step wherein the estimated geospatial position is located within the Earth's interior;
Fig. 4A shows a cumulative distribution function plot that illustrates the performance improvement achieved by the computer-implemented method for a satellite system that only comprises LEO satellites;
Fig. 4B shows a cumulative distribution function plot that illustrates the performance improvement achieved by the computer-implemented method for a satellite system comprising a mixture of LEO and MEO satellites and for a satellite system comprising only MEO satellites;
Fig. 5A shows an example embodiment of a geospatial receiver configured to perform the computer-implemented method according to the present disclosure; and
Fig. 5B shows a suitable computing system enabling to implement embodiments of the above described computer-implemented method.

### Detailed Description of Embodiment(s)

Positioning, navigation and timing, PNT, technologies are some of the most essential technologies in modern society. Many sectors like aviation, mobility, agriculture, shipping, and energy rely on PNT services. Typically, in outdoor environments, these services are provided by Global Navigation Satellite Systems, GNSS, such as Galileo, GPS, BeiDou, and GLONASS. GNSS enjoys immense popularity with nearly six billion total receivers installed in 2024. However, GNSS satellites do have some problems and challenges. Due to their location in Medium Earth Orbit, MEO, at an altitude of around 20 000 km, their signals arrive on Earth with a relatively low signal strength. Attenuation may, for example, exceed -120 dBm. Consequently, indoor positioning solely using GNSS is unreliable. Moreover, this low power on ground, PoG, makes the satellite signals vulnerable to jamming attacks. Additionally, acquiring, tracking, and computing a position estimate requires a substantial amount of energy, which is typically undesirable in battery-powered geospatial receivers.

Recently, significant attention has been devoted to positioning using Low Earth Orbit, LEO, satellites. Nowadays, more constellations are being deployed to LEO over any other orbit, and multiple enterprises aim to solve or mitigate the shortcomings of GNSS by launching satellites to LEO. These satellites orbit the Earth at an altitude up to 2000 km and travel at significantly higher speeds compared to MEO satellites. This lower orbit has the advantage that significantly less path loss is incurred by the satellite signals, as the signals travel a shorter distance. Additionally, the higher velocity of the satellites helps resolve multipath and decreases precise point positioning, PPP, convergence time. However, the lower orbit also presents problems and challenges. In particular, converging upon a position estimate without upfront knowledge of a geospatial receiver's approximate position, i.e. during a so-called 'cold start', is challenging due to the lower orbit.

Typically, satellites broadcast signals that a geospatial receiver can acquire. A geospatial receiver refers to a functional component comprising the necessary hardware, software, or a combination thereof configured to receive satellite signals, process observables, and determine a geospatial position. A geospatial receiver may, for example, be comprised within a smartphone, a laptop, a smartwatch, or an onboard navigation unit of a vehicle such as a car, an airplane, a ship, a drone, or an agricultural machine.

To determine the distance between a satellite and the geospatial receiver, the Time-Of-Arrival, TOA, principle can be leveraged. More specifically, the distance is determined by measuring the time between transmission of the signal by the satellites and reception of the signal at the geospatial receiver, multiplied by the speed of light. The result is commonly referred to as a pseudorange or pseudorange observable. To this end, dedicated satellites are typically used that are specifically put in orbit for positioning purposes. Alternatively, communication satellites may be used for positioning purposes, i.e. non-dedicated satellites that are not specifically put into orbit for positioning purposes. This may be referred to as the signals of opportunity, SOP, approach. Herein, the change in frequency of the communication link can be observed and measured. The change in frequency or Doppler shift can be converted into a carrier phase observable or doppler shift observable, sometimes also referred to as pseudorange-rate, that is used for positioning.

Regardless of the used satellite system and the used observables, algorithm-based positioning is typically implemented to determine the geospatial position of the receiver from measurements of the satellite signals. The geospatial receiver typically collects measurements from the satellite system which are fed into an algorithm that computes a position therefrom. Two types of algorithms may typically be used: iterative descent algorithms and direct positioning algorithms.

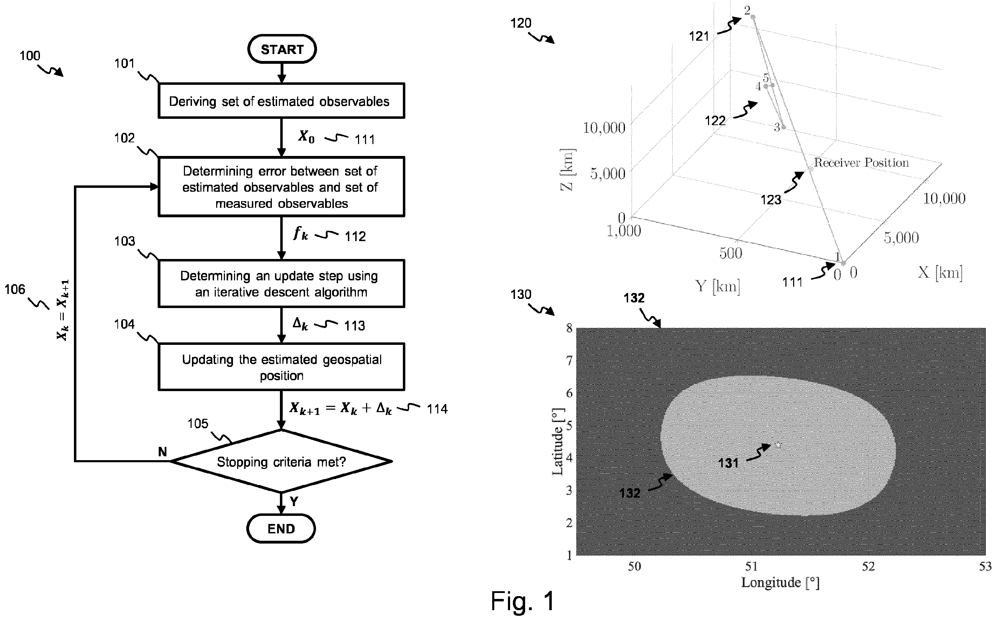

Fig. 1 shows example steps 100 typically performed by existing iterative descent algorithms to determine the geospatial position of a geospatial receiver from satellite signals. The iterative descent algorithm may start from an initial estimated geospatial position. This may be a last known location of the geospatial receiver, or an approximation of the geospatial receiver's location derived from other systems. However, this information is not always available as the geospatial receiver may have travelled a significant distance since its last known location, no base stations may be in view, or positioning may have just been enabled, e.g. when starting the navigation on a smartphone or when initiating the tracking of a locomotive physical activity on a smartwatch. As such, the geospatial receiver has to perform a so-called 'cold start', as no useful upfront or prior information is available on the receiver's position. In this case, the centre of the Earth is typically used as the initial estimate for the geospatial position of the receiver. The centre of the Earth may, for example, correspond to coordinates {0,0,0} in an Earth Centred Earth Fixed, ECEF, coordinate reference system and respective reference frame. The centre of the Earth may, for example, correspond to coordinates represented by the null vector of the chosen Earth Centred coordinate reference system and respective reference frame.

In a first step 101, a set of estimated observables *X*₀ 111 is derived from the initial estimated geospatial position relative to the satellite system, i.e. based on the position of the satellites within the satellite system. In a following step 102, an error or residual *fₖ* 112 is determined between the set of estimated observables 111 and a set of measured observables. This set of measured observables is obtained from the satellite system by acquiring satellite signals at the geospatial receiver. In a next step 103, the iterative descent algorithm determines an update step Δ*ₖ* 113 to reduce or minimize the error *fₖ* 112 between the measured and estimated observables. The initial estimated geospatial position is then updated in step 104 based on update step Δ*ₖ* 113. In doing so, an update of the estimated geospatial position *X*_{*k*+1} 114 is obtained. This update may, for example, be determined as *X*_{*k+*1} *= Xₖ +* Δ*ₖ.* This completes a first iteration of the iterative descent algorithm. The updated estimated geospatial position *X*_{*k*+1} 114 is then used as the estimated geospatial position *Xₖ* for the next iteration of the iterative descent algorithm. In other words, as long as a predetermined stopping criterium is not met in step 105, the iterative descent algorithm iterates 106 over steps 102 - 104, thereby iteratively determining update steps Δ*ₖ* and updated geospatial positions in each iteration *k* until the actual or true location of the geospatial receiver is determined with acceptable precision.

A problem with LEO-based positioning is that common iterative descent positioning algorithms easily fail to converge to the geospatial position of the receiver. This is illustrated in the example 120 of Fig. 1, which shows the estimated geospatial position 1 - 5 of a receiver during the first five iterations of an iterative descent algorithm using LEO satellites. In the example, there is no upfront knowledge of the receiver's approximate position and, thus, the initial position estimate is set at the centre of the Earth, i.e. at point 111. During its initial iteration, the iterative descent algorithm updates the initial position estimate 111 to arrive at the updated position estimate 121. This clearly overestimates, overshoots, or oversteps the true position 123 of the geospatial receiver. This even results in the iterative descent algorithm getting trapped in a local minimum 122 and thereby failing to converge to the actual position 123 of the geospatial receiver.

This problem can be attributed to the lower orbital altitude of LEO satellites, as the lower the orbital altitude of the satellite, the closer the initial estimate 111 should be to the actual location 123 of the receiver to result in convergence of the iterative descent algorithm. This is illustrated in plot 130 of Fig. 1, which illustrates the effect of the initial position estimate 111 on the convergence of an iterative descent algorithm when using LEO satellites. It will be apparent that, for clarity, the example plot 130 assumes that the receiver is located on the Earth's surface and, thus, there is no altitude component shown. The algorithm can only converge to the actual position 131 of the receiver if the initial position estimate falls within area 132, outside of which it will fail to converge, i.e. in area 132. The periphery of area 132 may, for example, be located at around 600 km from the actual position 131 of the receiver when using dedicated LEO satellites at an orbital altitude of 1000 km and pseudorange observables. When using Doppler shift observables the distance may even only be around 450 km. This is a relatively tiny area within the possible search space of the iterative descent algorithm, especially if no upfront knowledge is available on the receiver's approximate position.

To solve or at least alleviate these challenges and problems, the present disclosure introduces an adjustment step for geospatial positioning using iterative descent algorithms that avoids overstepping or overshooting of the iterative descent algorithm, thereby preventing that it gets trapped in a local minimum and fails to converge to the actual position of the geospatial receiver.

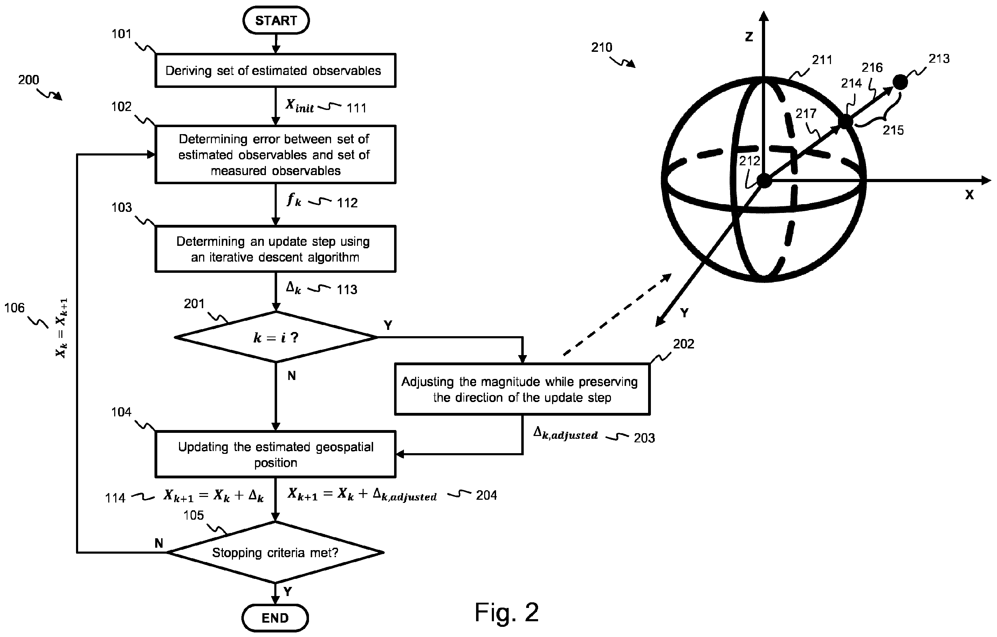

Fig. 2 shows steps 200 of a computer-implemented method according to example embodiments. The computer-implemented method comprises steps 101 - 106 as described in relation to Fig. 1. In an inventive way, the computer-implemented method further comprises, in step 202, adjusting the magnitude 215 of one of the update steps Δ*ₖ* 113 while preserving the direction of said update step, such that the update of the estimated geospatial position 204, 214 is located substantially at the Earth's surface 211.

This adjustment step 202 may be performed on one of the update steps Δ*ₖ* 113 determined in step 103 during any one of the iterations k of the iterative descent algorithm. The iteration of the iterative descent algorithm during which the adjustment step is performed may further be referred to as the *i*^{th} iteration. This is also illustrated in step 201 by the condition *k = i.* Thus, when the iterative descent algorithm is executing the *i*^{th} iteration, the computer-implemented method will proceed to step 202. The *i*^{th} iteration may be predetermined. Preferably, the *i*^{th} iteration may be one of the first few iterations of the iterative descent algorithm. More preferably, the *i*^{th} iteration may be the initial iteration of the iterative descent algorithm, i.e. *i* = 1. For example, the first iteration when performing a cold start from an initial position estimate such as the centre 212 of the Earth. In doing so, the second estimated geospatial position 214, updated from the initial estimated position, will be located substantially at the Earth's surface 211. By maintaining the direction and orientation of the update step Δ*ₖ*, the updated estimated geospatial position will moreover be located within the convergence area 132 illustrated in Fig. 1.

In a following step 104, the estimated geospatial position *Xₖ* may be updated once as *X*_{*k*+1} = *Xₖ + Δ_{k, adjusted}*, i.e. based on the adjusted update step Δ*_{k,adjusted}* determined in step 202. Thereafter, if the stopping criteria are not met in step 105, the computer-implemented method may continue to iteratively 106 improve the estimate of the geospatial location. It will be apparent that during iterations *k* of the iterative descent that are not the *i*^{th} iteration, the computer-implemented method updates the estimated geospatial position in step 104 based on the 'standard' update step Δ*ₖ* of said iteration, i.e. *X*_{*k*+1} *= Xₖ +* Δ*ₖ.*

Fig. 2 further shows an example schematic illustration 210 of the adjustment step 202 performed during an initial iteration of an iterative descent algorithm. In this example 210, the estimated geospatial position 212 may correspond to the centre of the Earth. As it is the initial iteration of the algorithm, estimate 212 may also be referred to as the initial position or the initial estimated geospatial position. During the first iteration, an update step Δ₁ is determined in step 103. The update step represents a vector 216 in a geospatial coordinate system 210. Without the adjustment step 202, update step Δ₁ would result in an update of the estimated geospatial position located at point 213. As discussed in relation to Fig. 1 such overstepping or overshooting can cause the iterative descent algorithm to get trapped in a local minimum and thereby failing to converge to the actual position of the geospatial receiver. As such, during the adjustment step 202, the magnitude or length of update step Δ₁ is adjusted to 217 such that the update of the estimated geospatial position is located at point 214 instead of 213, i.e. substantially at the Earth's surface 211.

The Earth's surface 211 may refer to the surface of any model or representation of the Earth, e.g. a geoid or an ellipsoid, in a geospatial coordinate system. Substantially at the Earth's surface may refer to a location in a geospatial coordinate system that lies within a radial range extending approximately 20 km above or below the Earth's surface 211, depending on the use-case of the geospatial receiver, e.g. on board of a submarine, a car, or an airplane.

Adjusting one of the update steps Δ*ₖ* according to the present disclosure avoids divergence of the iterative descent algorithm due to an overestimation of the radial distance of the geospatial receiver's position from the Earth's centre. In other words, the adjustment step 202 can avoid overstepping or overshooting of the iterative descent algorithm which can cause it to get trapped in a local minimum and thereby failing to converge to the actual position of the geospatial receiver. This improves the convergence rate of the iterative descent algorithm, in particular when upfront knowledge of the geospatial receiver's approximate position is unavailable, when the satellite system only comprises Low Earth Orbit, LEO, satellites, and/or when the satellite system comprises a mixed constellation design with at least one LEO satellite.

The computer-implemented method can further improve the convergence speed of iterative descent algorithms used for geospatial positioning, as it reduces the number of iterations needed to converge to the actual geospatial position of the geospatial receiver. This has the advantage that it reduces the computational burden of the iterative descent algorithm and, thus, reduces the energy consumption at the geospatial receiver. It is thus a further advantage that the computer-implemented method can extend the battery life of battery-powered geospatial receivers. It is a further advantage that the computer-implemented method can easily be implemented in existing geospatial receivers and that existing iterative descent algorithms can easily be adapted to perform the adjusting step 202.

Adjusting the magnitude while preserving the direction of an update step in step 202 may be achieved by scaling the update step Δ*ₖ* determined during the *i*^{th} iteration. Scaling may comprise multiplying the determined update step Δ*ₖ* with a scaling factor *α.* Thus, the adjusting in step 202 may include calculating Δ_{*k*,}*_{adjusted} =* Δ*ₖ * α.* It is an advantage that scaling the update step is computationally inexpensive. Alternatively, the adjusting step 202 may be achieved through normalization and rescaling.

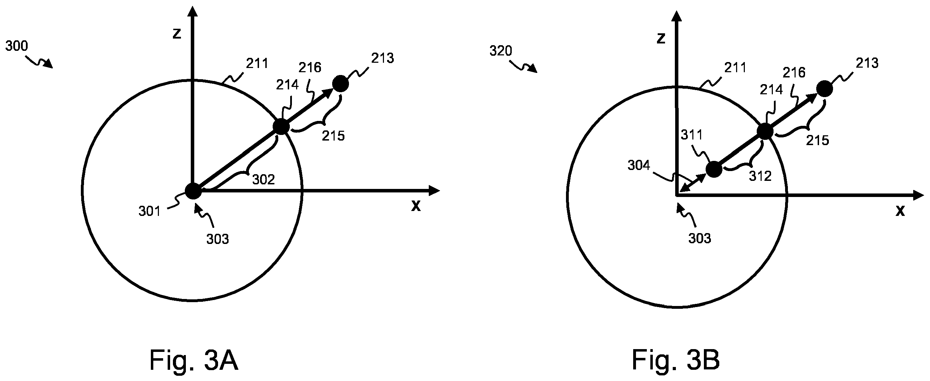

The scaling factor *α* may be equal to a ratio of the radial distance r from the estimated geospatial position to the Earth's surface relative to the magnitude of the update step ||Δ*ₖ*||, i.e. $α = \frac{r}{\left‖{Δ}_{k}\right‖}$. It is a further advantage that determining the scaling factor in this way is also computationally inexpensive. Fig. 3A and Fig. 3B further illustrate how the scaling factor may be determined depending on the location of the estimated geospatial position according to two example embodiments.

Fig. 3A shows an example embodiment wherein the estimated geospatial position 301 of the *i*^{th} iteration coincides with the centre of the Earth 303. This may, for example, be the initial position estimate during the first iteration of the iterative descent algorithm. If the estimated geospatial position 301 is located at the centre of the Earth 303, the radial distance 302 from the estimated geospatial position 301 to the Earth's surface 211 may correspond to a mean radius of the Earth depending on the used Earth model, e.g. ellipsoid or geoid. In other words, in this case, r may correspond to the mean radius of the Earth. Alternatively, r may correspond to a more precise Earth radius at a certain location on Earth, a median radius of the Earth, or any other average radius of the Earth.

Fig. 3B shows an example embodiment wherein the estimated geospatial position 311 of the *i*^{th} iteration is located within the Earth's interior, i.e. beneath a reference surface representation 211 of the Earth such as a geoid or reference ellipsoid. The estimated geospatial position 311 of the *i*^{th} iteration may thus be located at a radial distance 304 from the Earth's centre 303 to the Earth's surface 211. This 311 may, for example, be the second, third, or fourth position estimate of the iterative descent algorithm. In this case, the radial distance r for determining the scaling factor according to $α = \frac{r}{\left‖{Δ}_{k}\right‖}$ may correspond to the radial distance 312 between the position estimate 311 and the Earth's surface 211, i.e. the distance 312 between point 311 and the surface of the Earth 211 along a radial direction of the Earth.

The iterative descent algorithm may preferably be a Gauss-Newton Least Squares algorithm, as the improvement in convergence speed and convergence rate may be particularly significant in this case. However, it will be apparent that other iterative descent algorithms may also be used, e.g. a gradient descent algorithm, a Levenberg-Marquardt algorithm, a Trust region algorithm, or any other least squares algorithm.

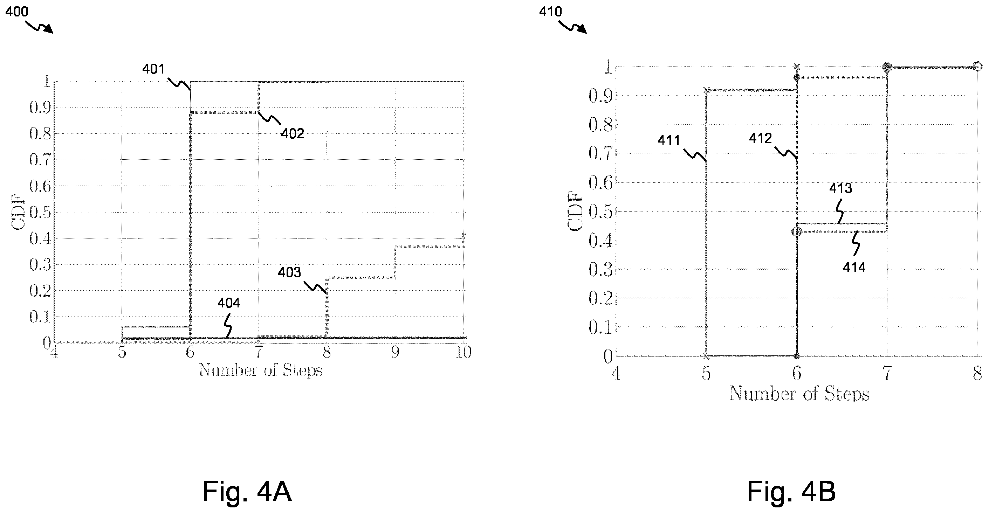

Fig. 4A shows a cumulative distribution function plot 400 that illustrates the performance improvement achieved by the computer-implemented method for a satellite system that only comprises LEO satellites. The plot 400 shows the difference in performance between an 'unadjusted' iterative descent algorithm, and the same iterative descent algorithm that performs the adjustment step according to the present disclosure in its initial iteration. The performance of the 'unadjusted' iterative descent algorithm is shown when using pseudorange observables 403, and when using pseudorange-rate observables 404. The performance of the adjusted iterative descent algorithm according to the present disclosure is also shown when using pseudorange observables 401, and when using pseudorange-rate observables 402. The iterative descent algorithm used in these examples is a Gauss-Newton Least Squares algorithm.

While the 'unadjusted' iterative descent algorithm with pseudorange positioning 403 only achieves a convergence rate of 41.49%, the adjusted algorithm according to the present disclosure 401 reaches a convergence rate of 99.99%. Wilson score confidence intervals with 99% (3-σ) confidence level for 403 are only [0.413597, 0.416135], in contrast to the adjusted algorithm according to the present disclosure 401, which has a confidence interval of [0.999982, 0.999997].

The 'unadjusted' iterative descent algorithm with pseudorange-rate positioning 404 only has a convergence rate of 1.83%, while the adjusted algorithm according to the present disclosure 402 with pseudorange-rate reaches a convergence rate of 100%. Wilson score confidence intervals with 99% (3-σ) confidence level for 404 are only [0.018005, 0.018696], in contrast to the adjusted algorithm according to the present disclosure 402, which has a confidence interval of [0.999993, 1.000000].

Fig. 4A also shows that the adjustment step significantly reduces the number of iterations or steps necessary to converge upon the actual position of the geospatial receiver when solely using LEO satellites. The 'unadjusted' iterative descent algorithm with pseudorange 402 starts converging after around 7 steps or iterations but typically needs more steps. This is in contrast to the adjusted iterative descent algorithm 401, which converges in 5 or 6 steps. These results clearly show that the adjustment step according to the present invention significantly improves the step performance and convergence performance of existing iterative descent algorithms when solely relying on LEO satellites.

Fig. 4B shows a cumulative distribution function plot 410 that illustrates the performance improvement achieved by the computer-implemented method for a satellite system comprising a mixture of LEO and MEO satellites 413, 414 and for a satellite system comprising only MEO satellites 411, 412. The iterative descent algorithm used in these examples is a Gauss-Newton Least Squares algorithm. The adjustment step in these examples is performed during the initial iteration of the iterative descent algorithm. The observables in these examples are pseudorange observables.

Plot 410 shows a performance comparison between an 'unadjusted' iterative descent algorithm using a mixed constellation of LEO and MEO satellites 414 and the same iterative descent algorithm that performs the adjustment step according to the present disclosure using the same mixed constellation of LEO and MEO satellites 413. Both algorithms 413, 414 have a convergence rate of 100%. However, the adjusted iterative descent algorithm 413 has an improved convergence speed relative to the 'unadjusted' iterative descent algorithm 414.

Plot 410 further shows a performance comparison between an 'unadjusted' iterative descent algorithm only using MEO satellites 412 and the same iterative descent algorithm that performs the adjustment step according to the present disclosure using the same MEO satellites 411. On average, performing the adjustment step reduces the number of steps required to converge by one step, i.e. one iteration less is needed compared to the 'unadjusted' iterative descent algorithm. This shows that the computer-implemented method according to the present disclosure can also improve the performance of GNSS receivers solely using MEO satellites.

The performance results shown in Fig. 4A and Fig. 4B were obtained by means of a simulation using the MATLAB Satellite Toolbox. The used dedicated LEO satellite constellation comprises 3 shells: a first shell with 133 satellites in a Walker Delta topology at an orbital altitude of 1835 km with an inclination of 34°, a second shell with 99 satellites in a Walker Delta topology at an orbital altitude of 1550 km with an inclination of 86°, and a third shell with 150 satellites in a Walker Delta topology at an orbital altitude of 1477 km with an inclination of 80°. The used MEO satellite constellation is the Galileo constellation comprising 24 satellites in a Walker Delta topology in 3 planes at an orbital altitude of 23 222 km with an inclination of 56°. To simulate the performance when using pseudorange-rate observables, i.e. in 402 and 404, the Starlink constellation by SpaceX is simulated including 7026 in LEO.

A Monte Carlo simulation is performed. To this end, the aforementioned constellations are deployed over a 24 h time frame to test the convergence of the algorithms and the number of steps necessary to reach convergence. After propagating the constellation over this time, random times are generated anywhere throughout the 24 h period with a sample time of 1 second. The random samples are drawn from a uniform distribution function. Random locations are generated from a uniform distribution function with latitudes between -90° and 90° and longitudes between -180° and 180°. Using these latitudes and longitudes, the entire surface of the Earth becomes a potential receiver location. If at this random location less than four satellites are in view, a new location was drawn from this distribution until four satellites are in view. Altitudes are chosen between 0m and 15 km. These altitudes are typically used for positioning for agriculture, tourism, commercial aviation, etc.

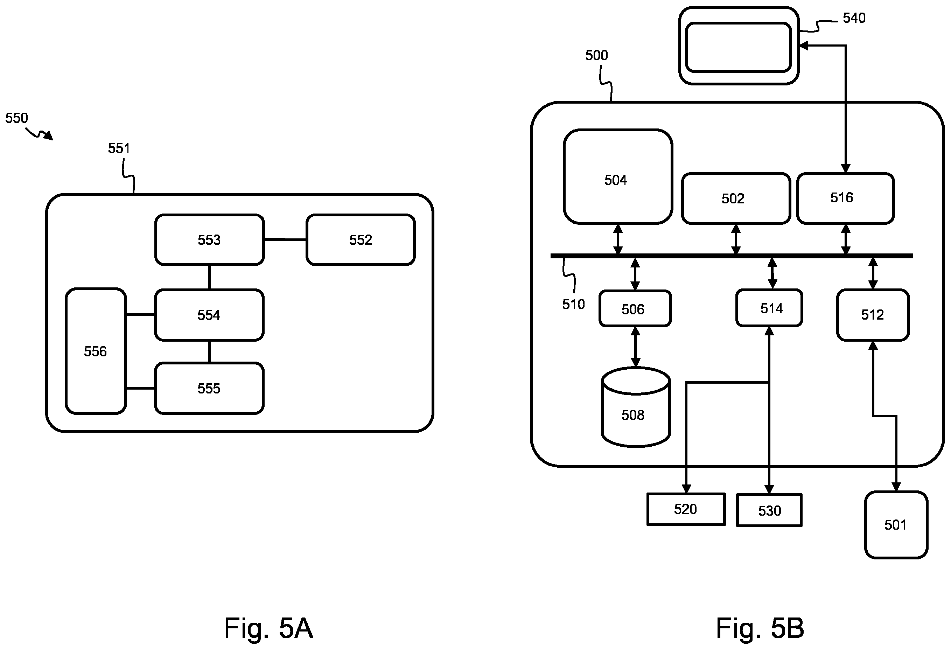

Fig. 5A shows an example embodiment 550 of a geospatial receiver 551 configured to perform the computer-implemented method according to the present disclosure. The geospatial receiver 551 may comprise an antenna 552 configured to receive signals transmitted by one or more positioning satellites. The antenna 552 may be operatively coupled to an RF front-end circuitry 553 configured to perform signal amplification, filtering, down conversion, and/or digitization of the received signals. The digitized signals may be provided to a controller circuitry 554, which may be configured to acquire, track, and demodulate the satellite signals to extract one or more observables, such as pseudorange, carrier-phase, and/or Doppler-shift measurements. The extracted observables may be supplied to a navigation circuitry 555 that is configured to determine a geospatial position of the receiver 551 based on the observables and satellite ephemeris data. The navigation circuitry 555 may thus be configured to perform the computer-implemented method according to the present disclosure. The navigation circuitry 555 may further be configured to determine velocity and/or time solutions. Navigation circuitry 555 may thus be configured to perform positioning, navigation, and timing, PNT, services. It will further be apparent that the controller circuitry 554 and the navigation circuitry 555 may also be provided within a single operational unit, e.g. a processor circuitry.

The receiver 551 may further include a memory 556 for storing satellite orbital data, configuration parameters, and processed navigation information. The receiver 551 may further comprise a clock circuitry (not shown in Fig. 5A), e.g. a crystal oscillator or temperature-compensated crystal oscillator. The clock circuitry may provide timing references for signal processing and navigation computations. The geospatial receiver 551 may further include one or more communication interfaces (not shown in Fig. 5A) configured to output navigation data or receive correction data. The receiver 551 may be comprised within a user device or user equipment. The communication interfaces may allow the geospatial receiver 551 to receive inputs from a user device or display PNT outputs to a user device. The user device or user equipment may, for example, be a smartphone, a laptop, a smartwatch, or an onboard navigation unit of a vehicle such as a car, an airplane, a ship, a drone, or an agricultural machine. The receiver 551 may further comprise auxiliary sensors (not shown in Fig. 5A), e.g. inertial sensors or a barometric pressure sensor, to enhance positioning accuracy or availability. The aforementioned components may be operatively interconnected and collectively configured to perform satellite-based geospatial positioning.

Fig. 5B shows a suitable computing system 500 enabling to implement embodiments of the above described computer-implemented method. Computing system 500 may in general be formed as a suitable general-purpose computer and comprise a bus 510, a processor 502, a local memory 504, one or more optional input interfaces 514, one or more optional output interfaces 516, a communication interface 12, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems such as for example, amongst others, a satellite system 501 or a geospatial receiver. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, -ROM disk, solid state drives, flash memory cards, etc. could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

As used in this application, the term "circuitry" may refer to one or more or all of the following: (a) hardware-only circuit implementations (such as implementations in only analogue and/or digital circuitry) and (b) combinations of hardware circuits and software, such as (as applicable): (i) a combination of analogue and/or digital hardware circuit(s) with software/firmware and (ii) any portions of hardware processor(s) with software (including digital signal processor(s)), software, and memory(ies) that work together to cause an apparatus to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware.

## Claims

1. A computer-implemented method for geospatial positioning of a geospatial receiver by a satellite system; the computer-implemented method comprising:
- iteratively determining (103) an update step (113) using an iterative descent algorithm configured to minimize an error (112) between a set of estimated observables, derived from an estimated geospatial position of the geospatial receiver relative to the satellite system, and a set of measured observables obtained from the satellite system; and
- updating (104) the estimated geospatial position (114) in each iteration (106) based on the respective update step (113);
wherein the computer-implemented method is **characterized by**:
- adjusting (202) the magnitude (215) while preserving the direction of one of the update steps (113) such that the update (204, 214) of the estimated geospatial position (212) is located substantially at the Earth's surface (211).

2. The computer-implemented method according to claim 1, wherein adjusting the magnitude while preserving the direction of one of the update steps comprises scaling one of the update steps.

3. The computer-implemented method according to any of the preceding claims, wherein the estimated geospatial position (301, 311) that is updated with the adjusted update step (302, 312) is located within the Earth's interior at a radial distance (304) from the Earth's centre (303) to the Earth's surface (211).

4. The computer-implemented method according to claim 3, wherein the estimated geospatial position (301) that is updated with the adjusted update step (302) is located at the centre (303) of the Earth.

5. The computer-implemented method according to claim 2 and claim 3 or 4, wherein scaling one of the update steps comprises scaling the update step by a factor equal to a ratio of the radial distance from the estimated geospatial position to the Earth's surface relative to the magnitude of the update step.

6. The computer-implemented method according to any of the preceding claims, further comprising adjusting an update step determined during an initial iteration of the iterative descent algorithm; and updating an initial estimated geospatial position based on the adjusted update step.

7. The computer-implemented method according to any of the preceding claims, wherein the set of estimated observables and the set of measured observables are selected from the group comprising pseudo range observables, carrier phase observables, and doppler shift observables.

8. The computer-implemented method according to any of the preceding claims, wherein the iterative descent algorithm is a Gauss-Newton Least Squares algorithm.

9. The computer-implemented method according to any of the preceding claims, wherein the satellite system comprises at least four satellites selected from the group comprising Low Earth Orbit, LEO, satellites; Medium Earth Orbit, MEO, satellites; and Geostationary Earth Orbit, GEO, satellites.

10. The computer-implemented method according to claim 9, wherein the satellite system only comprises Low Earth Orbit, LEO, satellites.

11. A geospatial receiver configured to perform the computer implemented method according to any one of claims 1 to 10.

12. A computer program comprising instructions which, when the program is executed by a computer, cause the computer to perform the computer implemented method according to any one of claims 1 to 10.

13. A computer-readable medium comprising instructions which, when executed by a computer, cause the computer to perform the computer implemented method according to any one of claims 1 to 10.
